# EUROPEAN PATENT SPECIFICATION

(11) **EP 2 492 876 B1**
(45) Date of publication and mention of the grant of the patent: **05.06.2019**
(21) Application number: 12156452.0
(22) Date of filing: 22.02.2012
(51) Int. Cl.: G07C 9/00, B60R 25/00

(54) **Electronic key system**
Elektronisches Schlüsselsystem
Système de clé électronique

(30) Priority: 25.02.2011 JP 2011040179
(43) Date of publication of application: 29.08.2012
(73) Proprietor: Kabushiki Kaisha Tokai Rika Denki Seisakusho, Ohguchi-cho Niwa-gun Aichi 480-0195 (JP)
(72) Inventor: Tobimatsu, Tadayuki, Niwa-gun, Aichi 480-0195 (JP); Mori, Hiroshi, Niwa-gun, Aichi 480-0195 (JP)
(74) Representative: TBK

(56) References cited:
- EP-A1- 1 853 049
- EP-A1- 2 039 856
- EP-A2- 2 246 226
- EP-A2- 2 251 837
- JP-A- 2004 084 406
- US-A1- 2006 244 312

## Description

The present invention relates to an electronic key system that performs communication between an electronic key and a vehicle to permit operation of an in-vehicle device in a vehicle.

Electronic key systems are often used in vehicles. An electronic key system uses an electronic key, which is capable of transmitting an ID code through wireless communication, as a vehicle key. The electronic key system performs ID verification through wireless communication performed between the electronic key and the vehicle (refer to, for example, Japanese Laid-Open Patent Publication No. 2005-76329). In such an electronic key system, when the electronic key receives a request from the vehicle, the electronic key automatically returns the ID code. When ID verification is accomplished outside the vehicle, the electronic key system permits locking and unlocking of the doors. For example, in a state in which the doors are locked, the doors become unlocked by gripping an outside door handle. In a state in which the doors are unlocked, the doors become locked by touching a lock sensor on an outside door handle. When ID verification is performed inside the vehicle, the starting of the engine can be permitted.

In the electronic key system of the above publication, each transmitter transmits a request to both the interior and the exterior of the vehicle. This reduces the number of transmitters since transmitters dedicated to the transmission of a request to just one of the interior and exterior of the vehicle are not used. More specifically, the vehicle includes a driver side transmitter, which transmits a request to a driver side vehicle exterior area and driver side vehicle interior area, and a passenger side transmitter, which transmits a request to a passenger side vehicle exterior area and a passenger side vehicle interior area. In the vehicle, the two transmitters form an overlapping communication area. In a communication area, the electronic key returns an ID code in response to a request transmitted from a transmitter. When the electronic key returns an ID code to the communication area formed by the two transmitters, the vehicle determines that the electronic key is located inside the vehicle. When the electronic key returns an ID code to the communication area formed by only one of the two transmitters, the vehicle determines that the electronic key is located outside the vehicle.

In the electronic key system of the above publication, the driver side transmitter is required to form a certain vehicle exterior verification communication area outside the driver side of the vehicle while also forming an vehicle interior verification communication area that entirely includes the vehicle interior. The same applies the passenger side transmitter. Thus, depending on the shape of the vehicle, it is difficult to form a communication area including both the vehicle exterior and the vehicle interior. Accordingly, in an electronic key system including a transmitter that transmits a signal to both exterior and interior of a vehicle, it is required that a communication area be formed in accordance with the shape of the vehicle.

A further electronic key system is disclosed by the document EP 2 039 856 A1, which teaches that a keyless device of a vehicle sets to change a search area "A" of a first vehicle exterior antenna to a search area "A2" that is smaller than a normal area "A1", and an overlapped area of a search area "B" of a second vehicle exterior antenna and a normal search area "B1" is set to correspond only to an interior of the vehicle.

Moreover, document US 2006/0244312 A1 discloses a vehicle door control system. When a response signal has been continuously received over a predetermined period from a portable device in response to a request signal periodically transmitted from a vehicle unit, it can be inferred that the holder of the portable device has not merely passed by the vehicle but stays in the vicinity of the vehicle with the will to ride in the vehicle. Therefore, vehicle doors having the automatic opening/closing function are unlocked and automatically opened. This eliminates a need for the holder of the portable device to command the operations of unlocking and automatically opening the vehicle doors.

Accordingly, it is an object of the present invention to provide an electronic key system that forms a communication area in the exterior and interior of a vehicle in accordance with the shape of the vehicle to accurately determine the location of an electronic key.

According to the present invention, there is thus provided an electronic key system, as defined by the appended claims.

In the structure according to the present invention, when ID verification is accomplished in the exterior communication area, the vehicle determines that the electronic key is located outside the vehicle. When ID verification is accomplished in both exterior and interior verification communication areas, the vehicle determines that the electronic key is located inside the vehicle. Thus, the location of the electronic key can be determined with a small number of transmission devices. Further, the exterior and interior verification communication areas have different sizes. Thus, desirable communication areas are formed inside and outside the vehicle in accordance with the shape of the vehicle. This allows for the location of the electronic key to be accurately determined with a small number of transmission devices.

Embodiments and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic block diagram showing an electronic key system;
Fig. 2A is a plan view of a vehicle showing a driver side exterior verification communication area, and Fig. 2B is a plan view of a vehicle showing a driver side interior verification communication area;
Fig. 3A is a plan view of the vehicle showing a passenger side exterior verification communication area, and Fig. 3B is a plan view of the vehicle showing a passenger side interior verification communication area;
Fig. 4 is a schematic plan view showing the vehicle and the relationship of the communication area and received signal intensity;
Fig. 5 is a time chart showing a communication operation of the electronic key system;
Fig. 6 is a time chart showing the communication operation of the electronic key system;
Fig. 7 is a time chart showing the communication operation of the electronic key system;
Fig. 8 is a time chart showing the communication operation of the electronic key system;
Fig. 9 is a time chart showing the communication operation of the electronic key system;
Fig. 10 is a flowchart showing an operation of the electronic key;
Fig. 11 is a flowchart showing a location determination process and operation performed
by the electronic key system when a driver side request switch is operated as a user enters the vehicle;
Fig. 12 is a flowchart showing the location determination process and operation performed by the electronic key system when an engine switch is operated and the user is in the vehicle; and
Fig. 13 is a flowchart showing a location determination process and operation performed by the electronic key system when the driver side request switch is operated as the user leaves the vehicle.

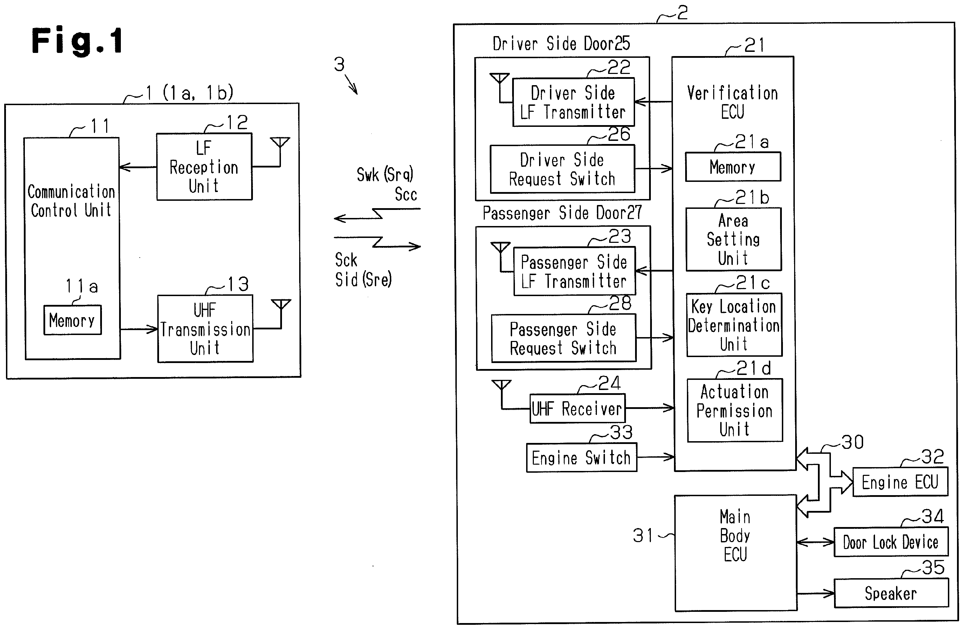

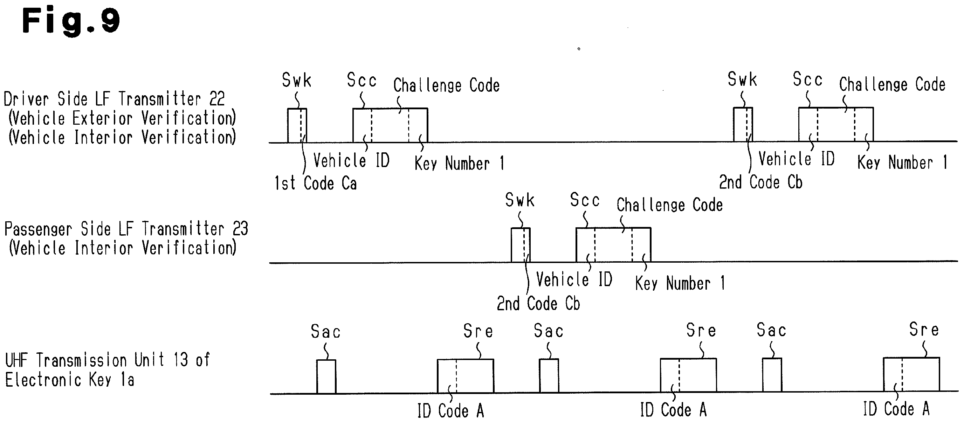

An electronic key system 3 according to one embodiment of the present invention and applied to a vehicle will now be described with reference to Figs. 1 to 13.

As shown in Fig. 1, the electronic key system 3 is installed in a vehicle 2. The electronic key system 3 allows, for example, a driver to perform vehicle operations, such as the locking of vehicle doors or the starting and stopping of an engine, without the need to actually use a vehicle key. The electronic key system 3 includes an electronic key 1, which serves as the vehicle key and is capable of transmitting a unique ID code through wireless communication. The electronic key system 3 carries out ID verification by performing short range wireless communication (with a communication range of several meters) between the electronic key 1 and the vehicle 2.

The electronic key system 3 is a key-operation-free system that performs ID verification when a door of the vehicle 2 is operated and permits the locking and unlocking of the doors. More specifically, the vehicle 2 includes a verification electronic control unit (ECU) 21 and a main body ECU 31. The verification ECU 21 performs ID verification when short range wireless communication (hereinafter referred to as smart communication) is performed with the electronic key 1. The main body ECU 31 manages the locking and unlocking of the vehicle doors. The verification ECU 21 is connected to a driver side LF transmitter 22, a passenger side LF transmitter 23, and a UHF receiver 24. The driver side LF transmitter 22 is arranged in a driver side door 25 (right door) of the vehicle 2 to transmit a signal on a low frequency (LF) band. The passenger side LF transmitter 23 is arranged in a passenger side door 27 (left door) of the vehicle to transmit a signal on an LF band. The UHF receiver 24 is arranged in a front part of the vehicle interior and receives wireless signals on an ultrahigh frequency (UHF) band. The verification ECU 21 is connected by, for example, an in-vehicle local area network (LAN) 30 to the main body ECU 31 and the engine ECU 32. The verification ECU 21 determines whether the electronic key 1 is located inside or outside the vehicle 2 based on a combination of response signals from the electronic key 1 that are sought for by request signals Srq transmitted from the LF transmitters 22 and 23. The driver side LF transmitter 22 and the passenger side LF transmitter 23 are examples of transmission devices.

The electronic key 1 includes a communication control unit 11, which performs wireless communication with the vehicle 2. The communication control unit 11 includes a memory 11a, which stores an ID code that is unique to the electronic key 1. The communication control unit 11 is connected to an LF reception unit 12 and a UHF transmission unit 13. The LF reception unit 12 receives a radio wave on the LF band. The UHF transmission unit 13 transmits a signal on the UHF band in accordance with a command from the communication control unit 11.

A driver side request switch 26 is arranged on the driver side door 25 and operated when the user locks or unlocks the vehicle doors from outside the vehicle 2 at the driver side. Further, a passenger side request switch 28 is arranged on the passenger side door 27 and operated when the user locks or unlocks the vehicle doors from outside the vehicle 2 at the passenger side. The request switches 26 and 28 are momentary type push switches and are examples of operation units.

When the user is outside the vehicle 2 and operates the driver side request switch 26 or passenger side request switch 28, the verification ECU 21 attempts to establish smart communication. When the user operates the driver side request switch 26 or passenger side request switch 28, the driver side LF transmitter 22 or passenger side LF transmitter 23 intermittently transmits a request signal Srq. When the electronic key 1 receives the request signal Srq with the LF reception unit 12 and smart communication is established, the electronic key 1 responds to the request signal Srq and returns an ID code signal Sid, which includes the ID code registered in its memory 11a, from the UHF transmission unit 13. Then, the verification ECU 21 verifies the ID code of the received ID code signal Sid with the ID code registered in the memory 21a. When this ID verification (vehicle exterior verification) is accomplished, the verification ECU 21 determines that the electronic key 1 is located outside the vehicle 2 and unlocks the vehicle doors with the main body ECU 31. Accordingly, to unlock the doors, the user only needs to carry the electronic key 1, approach the vehicle 2, and push the driver side request switch 26 or the passenger side request switch 28.

The electronic key system 3 also functions as a smart start system that allows the user to start and stop the engine just by operating a switch without the need to use a vehicle key. The smart start system will now be described. The vehicle 2 includes an engine ECU 32 that executes ignition control and fuel injection control on the engine based on the ID verification result of the verification ECU 21. The engine ECU 32 is connected by an in-vehicle LAN 30 to various types of ECUs, such as the verification ECU 21. An engine switch 33, which is operated to switch the power state (power position) of the vehicle 2, is arranged near the driver seat. The engine switch 33 is connected to the verification ECU 21. The engine switch 33 is one example of an operation unit. The verification ECU 21 is connected to the verification ECU 21.

When the engine switch 33 is pushed, the verification ECU 21 sequentially transmits a request signal Srq from the LF transmitters 22 and 23 to perform ID verification (vehicle interior verification). When ID verification is accomplished in both of two communication areas formed by the driver side LF transmitter 22 and the passenger side LF transmitter 23, the verification ECU 21 determines that the electronic key 1 is located inside the vehicle 2.

When the verification ECU 21 determines that vehicle interior verification has been accomplished, the verification ECU 21 permits a process that is based on the engine switch 33 to be performed. For example, the verification ECU 21 shifts the power state whenever the engine switch 33 is pushed in the order of ACC ON, IG ON, and power OFF. Further, in a state in which the engine is stopped and the brake pedal is depressed, the verification ECU 21 starts the engine ECU 32 when the engine switch 33 is pushed.

In the present embodiment, when the verification ECU 21 detects that the request switches 26 and 28 have been operated, the verification ECU 21 first performs vehicle exterior verification to determine whether or not the electronic key 1 is located outside the vehicle 2. When the verification ECU 21 determines that vehicle exterior verification has been accomplished, the verification ECU 21 performs vehicle interior verification to determine whether the electronic key 1 has not been forgotten in the vehicle 2. When the verification ECU 21 determines that vehicle interior verification has not been accomplished and that the electronic key 1 thus has not been forgotten in the vehicle 2, the verification ECU 21 locks the vehicle doors with the main body ECU 31.

In the present embodiment, the ID verification is encrypted communication in which encryption is performed through challenge-response authentication. In the challenge-response authentication, the vehicle 2 sends a challenge signal Scc to the electronic key 1. In response to the challenge signal Scc, the electronic key 1 computes a response code and transmits a response signal Sre to the vehicle 2. Then, the vehicle 2 determines whether the response code computed by the electronic key 1 is correct. The verification ECU 21 performs response verification by comparing the response code of the electronic key 1 with a response code that it computed. The verification ECU 21 uses accomplishment of the response verification as one condition for determining whether ID verification has been accomplished.

The verification ECU 21 includes an area setting unit 21b that sets the communication areas formed by the LF transmitters 22 and 23 to have different sizes depending on whether vehicle exterior verification or vehicle interior verification is performed. The area setting unit 21b sets the communication area formed by the LF transmitters 22 and 23 to be larger when vehicle exterior verification is performed and smaller when vehicle interior verification is performed.

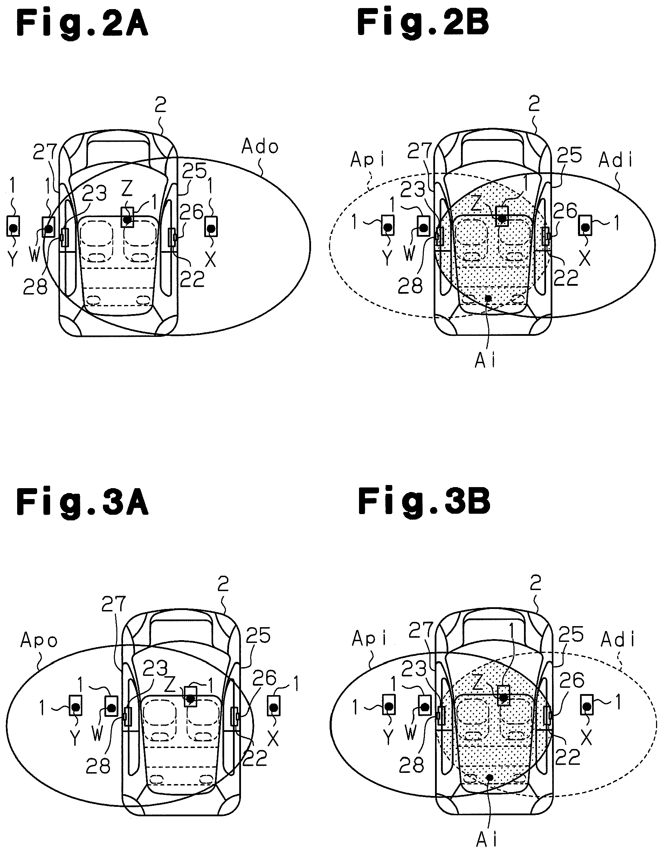

In the present embodiment, during vehicle exterior verification, the driver side LF transmitter 22 transmits a request signal Srq with a relatively strong output to form a driver side exterior verification communication area Ado (refer to Fig. 2A). The driver side exterior verification communication area Ado is formed around the driver side door 25 and extends in the front to rear direction of the vehicle 2. During vehicle interior verification, the driver side LF transmitter 22 transmits a request signal Srq with a relatively weak output to form a driver side interior verification communication area Adi (refer to Fig. 2B). The driver side interior verification communication area Adi includes a vehicle exterior communication area, which is formed at the right side of the driver side door 25, and a vehicle interior communication area, which is formed at the left side of the driver side door 25. Here, the vehicle interior communication area is formed in correspondence with the size of the vehicle interior of the vehicle 2.

In the same manner, during vehicle exterior verification, the passenger side LF transmitter 23 transmits a request signal Srq with a relatively strong output to form a passenger side exterior verification communication area Apo (refer to Fig. 3A). The passenger side exterior verification communication area Apo is formed around the passenger side door 27 and extends in the front to rear direction of the vehicle 2. During vehicle interior verification, the passenger side LF transmitter 23 transmits a request signal Srq with a relatively weak output to form a passenger side interior verification communication area Api (refer to Fig. 3B). The passenger side interior verification communication area Api includes a vehicle exterior communication area, which is formed at the left side of the passenger side door 27, and a vehicle interior communication area, which is formed at the right side of the passenger side door 27. Here, the vehicle interior communication area is formed in correspondence with the size of the vehicle interior of the vehicle 2. The driver side interior verification communication area Adi and the passenger side interior verification communication area Api partially overlap each other in the vehicle interior. The overlapping region is referred to as a vehicle interior verification communication area Ai.

The area setting unit 21b inserts information indicating whether the exterior verification communication areas Ado and Apo are formed or whether the interior communication area Adi and Api are formed in the request signal Srq. When the exterior verification communication areas Ado and Apo are formed, the area setting unit 21b inserts a first code Ca, which serves as exterior information, in the request signal Srq. When the interior verification communication areas Adi and Api are formed, the area setting unit 21b inserts a second code Cb, which serves as interior information, in the request signal Srq.

When the electronic key 1 receives a request signal Srq including the first code Ca, the electronic key 1 determines whether or not a subsequent wireless signal is received based on a first received signal intensity threshold B1. When receiving a wireless signal exceeding the threshold B1 from the vehicle 2, the electronic key 1 returns an ID code signal Sid to the vehicle 2. When the electronic key 1 receives a request signal Srq including the second code Cb, the electronic key 1 determines whether or not a subsequent wireless signal is received based on a second received signal intensity threshold B2, which is greater than the first signal intensity threshold B1. When receiving a wireless signal exceeding the threshold B2 from the vehicle 2, the electronic key 1 returns an ID code signal Sid to the vehicle 2.

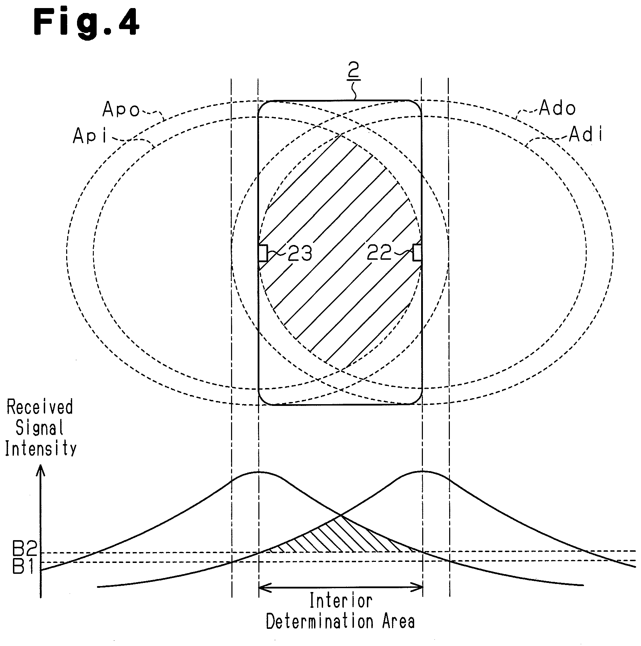

More specifically, as shown in Fig. 4, when the electronic key 1 receives a wireless signal from the LF transmitters 22 and 23, the intensity of the received wireless signal decreases as the LF transmitters 22 and 23 become farther. Hence, the communication area in which the electronic key 1 and the vehicle 2 can communicate with each other can be controlled by changing the received signal intensity threshold, which is used to determine whether or not a wireless signal is received from the electronic key 1. When the exterior verification communication areas Ado and Apo are formed, the electronic key 1 receives the first code Ca and sets the first received signal intensity threshold B1. When the interior verification communication areas Adi and Api are formed, the electronic key 1 receives the second code Cb and sets the second received signal intensity threshold B2.

The verification ECU 21 includes a key location determination unit 21c, which determines whether the electronic key 1 is located inside or outside the vehicle 2 during a door locking operation. In this example, when vehicle exterior verification is accomplished during a door locking operation, an interior verification communication area is formed with the one of the LF transmitters 22 and 23 arranged opposite to the side at which the door locking operation was performed. When vehicle interior verification is not accomplished, the key location determination unit 21c determines that the electronic key 1 has not been left inside the vehicle 2. When vehicle interior verification is accomplished in the interior verification communication area formed by the one of the LF transmitters 22 and 23 arranged opposite to the side at which the door locking operation was performed, the key location determination unit 21c forms the interior verification communication area again with the same transmitter to execute vehicle interior verification again and confirm whether the electronic key 1 has been forgotten in the vehicle 2. In this manner, the key location determination unit 21c determines the location of the electronic key 1 from the combination of the communication areas Ado, Adi, Apo, and Api that are formed with different sizes. The key location determination unit 21c functions as a determination unit.

The verification ECU 21 includes an actuation permission unit 21d that permits actuation of door locks and the engine based on the location of the electronic key 1 determined by the key location determination unit 21c. When the key location determination unit 21c determines that the electronic key 1 is located outside the vehicle 2 and not inside the vehicle 2, the actuation permission unit 21d permits locking of the vehicle doors. When the electronic key 1 has been forgotten inside the vehicle 2 during the door locking operation, the verification ECU 21 notifies the user that the electronic key 1 is inside the vehicle 2. In this case, the verification ECU 21 outputs a voice message, such as "electronic key in vehicle" from a speaker 35. The door locks and the engine correspond to in-vehicle devices.

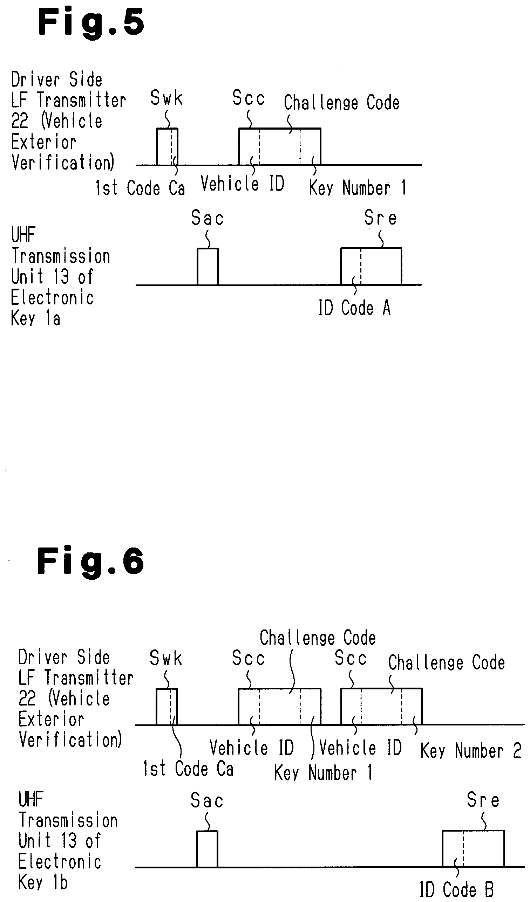

The basic operation of the electronic key system 3 in the present example will now be described with reference to Fig. 5. Here, the description will be given using the driver side LF transmitter 22, and the passenger side LF transmitter 23 will not be described since the processes are the same except in that the driver side and passenger side are reversed.

When the verification ECU 21 starts smart communication with the electronic key 1, the electronic key 1 is in an inactive (sleep) state. As shown in Fig. 5, to activate the electronic key 1, the verification ECU 21 transmits a wake signal Swk (request signal Srq) from the driver side LF transmitter 22. The driver side LF transmitter 22 repetitively transmits the wake signal Swk in constant intervals. Thus, the presence of the electronic key 1 inside and outside the vehicle 2 is monitored. The wake signal Swk includes the first code Ca or the second code Cb. The wake signal Swk is one example of an inquiry signal that starts ID verification.

When the electronic key 1 is located in the communication area Ado (Adi) of the wake signal Swk from the driver side LF transmitter 22, the LF reception unit 12 performs wake verification. When determining that wake verification has been accomplished, the LF reception unit 12 switches the communication control unit 11 from a sleep state (standby state) to an active state. When switching to the active state, the communication control unit 11 transmits an acknowledgement signal Sac from the UHF transmission unit 13.

When the vehicle 2 receives the acknowledgement signal Sac within a predetermined period from the transmission of the wake signal Swk, the vehicle 2 acknowledges the presence of the electronic key 1 in the communication area Ado (Adi) and transmits a challenge signal Scc from the driver side LF transmitter 22. The challenge signal Scc includes a vehicle ID, which is unique to the vehicle 2 and used to identify the vehicle 2, a challenge code, the value of which is varied whenever transmitted, and a key number of the electronic key 1. The key number indicates a sequential number of the key.

When receiving the challenge signal Scc, the electronic key 1 compares the received vehicle ID with a vehicle ID registered in the memory 11a to perform vehicle ID verification. When vehicle verification is accomplished, the electronic key 1 executes number verification to check the key number. In other words, the electronic key 1 checks whether it is the intended communication peer of the vehicle 2. When the number verification is accomplished, the communication control unit 11 computes a challenge code with its encryption key to generate a response code. When generation of the response code ends, the communication control unit 11 transmits the ID code, which is registered in its memory 11a, and a response signal Sre, which includes the response code, from the UHF transmission unit 13. The order in which the ID code and response code are arranged in the response signal Sre can be changed as required.

When transmitting the challenge signal Scc, the verification ECU 21 computes a challenge code with its encryption key to generate a response code. When receiving the response signal Sre from the electronic key 1 with the UHF receiver 24, the verification ECU 21 compares the response code of the electronic key 1 with the response code it computed to perform response verification. When determining that the response verification has been accomplished, the verification ECU 21 compares the ID code in the response signal Sre with the ID code registered in the memory 11a to perform ID verification.

A plurality of electronic keys 1 (1a, 1b, etc.) are registered in the electronic key system 3. When the second electronic key 1b is present in the driver side verification communication area Ado (Adi) and not the first electronic key 1a, the verification ECU 21 operates in the following manner. The verification ECU 21 determines the presence of the electronic key 1 in a predetermined order of registration. The verification ECU 21 gives priority to the electronic key 1 that has accomplished the preceding ID verification.

As shown in Fig. 6, the verification ECU 21 transmits a challenge signal Scc, which includes key number 1 corresponding to the first electronic key 1a, from the driver side LF transmitter 22. When the UHF receiver 24 does not receive a response signal Sre within a predetermined time, the verification ECU 21 transmits a challenge signal Scc that includes key number 2 corresponding to the second electronic key 1b from the driver side LF transmitter 22. When the second electronic key 1b receives the corresponding challenge signal Scc with the LF reception unit 12, the electronic key 1b transmits a response signal Sre, which includes its ID code, from the UHF transmission unit 13. Then, in the same manner as described above, the verification ECU 21 performs ID verification.

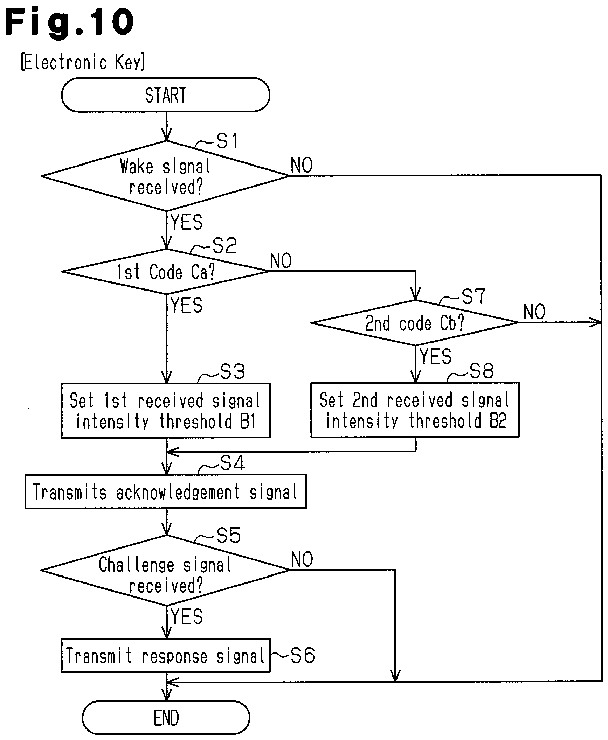

The operation of the electronic key 1 will now be described with reference to Fig. 10.

As shown in Fig. 10, the electronic key 1 first determines whether or not a wake signal Swk has been received (step S1). When the wake signal Swk has not been received (step S1: NO), the electronic key 1 ends processing. When the electronic key 1 has received the wake signal Swk (step S1: YES), the electronic key 1 determines whether or not the wake signal Swk includes the first code Ca (step S2). When the wake signal Swk is included in the first code Ca (step S2: YES), the electronic key 1 sets the first received signal intensity threshold B1 as a threshold for determining receipt of a wireless signal (step S3) and then proceeds to step S4.

When the wake signal Swk does not include the first code a (step S2: NO), the electronic key 1 proceeds to step S7. Then, the electronic key 1 determines whether or not the wake signal Swk includes the second code Cb (step S7). The electronic key 1 sets the second received signal intensity threshold B2 as a threshold for determining receipt of a wireless signal (step S8) and then proceeds to step S4.

Then, the electronic key 1 transmits an acknowledgement signal Sac (step S4) and determined whether or not a challenge signal Scc has been received (step S5). When the challenge signal Scc has not been received (step S5: NO), the electronic key 1 ends processing.

When the challenge signal Scc has been received (step S5: YES), the electronic key 1 transmits a response signal Sre (step S6). In this state, when the first received signal intensity threshold B1 is set, the electronic key 1 increases the transmitted signal intensity of the response signal Sre. When the second received signal intensity threshold B2 is set, the electronic key 1 decreases the transmitted signal intensity of the response signal Sre from that for the first received signal intensity threshold B1.

The communication operation of the electronic key system 3 for determining the location of the electronic key 1 and permitting actuation of in-vehicle devices will now be described with reference to Figs. 1 to 13. An example in which the driver side request switch 26 is operated will be described. Here, the description will be given using the driver side request switch 26, and the passenger side request switch 28 will not be described since the processes are the same except in that the driver side and passenger side are reversed.

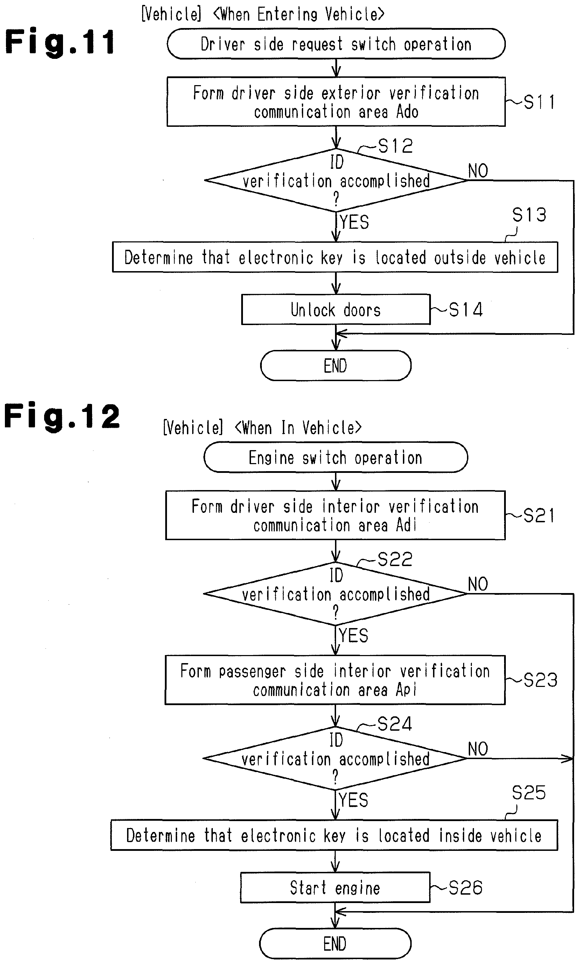

First, the operation of the electronic key system 3 performed when the user enters the vehicle 2 will be described with reference to Figs. 5 and 11.

When the user enters the vehicle 2, which is in a parked state (i.e., engine stopped and vehicle doors locked), the user approaches the driver side of the vehicle 2. In a state in which the electronic key 1 is located at position X as shown in Fig. 2A, the user operates the driver side request switch 26. The operated driver side request switch 26 sends an operation signal to the verification ECU 21. When receiving the operation signal, the verification ECU 21 starts vehicle exterior verification. More specifically, the verification ECU 21 transmits a wake signal Swk (request signal Srq) with a relatively strong output from the driver side LF transmitter 22 to form a driver side exterior verification communication area Ado (step S11). The electronic key 1 is located in the driver side exterior verification communication area Ado. Accordingly, the electronic key 1 receives the wake signal Swk with the LF reception unit 12 and transmits an acknowledgment signal Sac from the UHF transmission unit 13 in response to the wake signal Swk. In response to the acknowledgment signal Sac, the verification ECU 21 transmits a challenge signal Scc from the driver side LF transmitter 22. In response to the challenge signal Scc, the electronic key 1 transmits an ID code signal Sid (response signal Sre) from the UHF transmission unit 13.

As shown in Fig. 11, the verification ECU 21 uses the ID code included in the received response signal Sre to perform ID verification, or vehicle exterior verification (step S12). When the ID verification is accomplished (step S12: YES), the verification ECU 21 determines that the electronic key 1 is located outside the vehicle 2 (step S13). In this state, the vehicle doors are locked and the electronic key 1 is not located in the vehicle 2. Accordingly, when ID verification is accomplished in the driver side exterior verification communication area Ado, the verification ECU 21 determines that the electronic key 1 is located outside the vehicle 2. Then, the actuation permission unit 21d of the verification ECU 21 unlocks the vehicle doors with a door lock device 34 through the main body ECU 31 (step S14). In other words, unlocking of the doors is permitted. When ID verification is not accomplished in the driver side exterior verification communication area Ado (step S12: NO), the verification ECU 21 ends processing. In other words, the verification ECU 21 does not permit operation of the door lock device 34.

In a state in which the electronic key 1 is located at position Y as shown in Fig. 3A, when the user operates the passenger side request switch 28, the verification ECU 21 transmits a wake signal Swk (request signal Srq) from the passenger side LF transmitter 23 to form the passenger side exterior verification communication area Apo. Thus, the verification ECU 21 determines the location of the electronic key 1 and permits operation of the door lock device 34 in the same manner as described above.

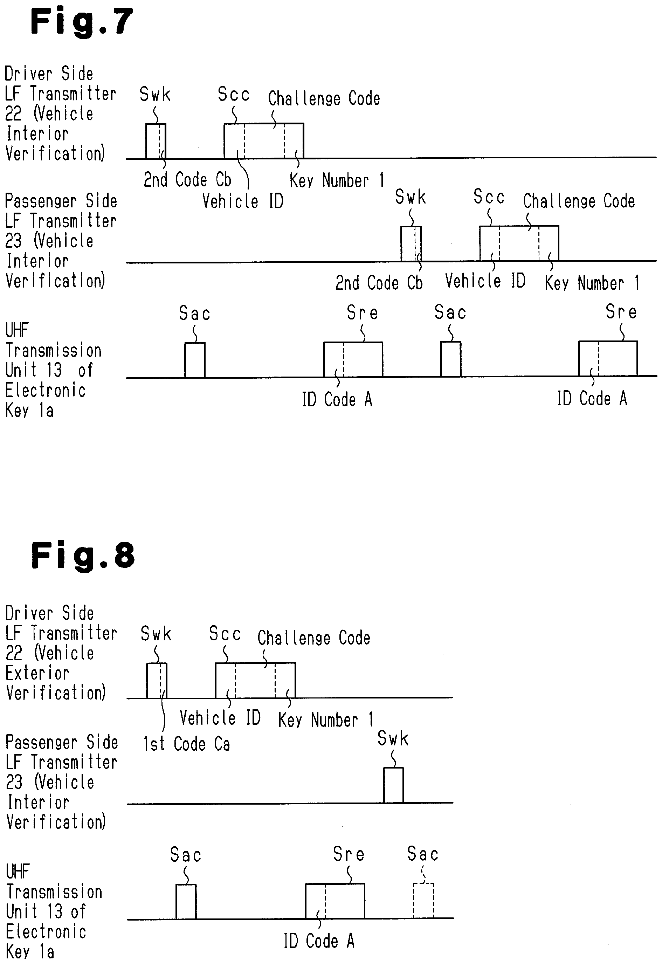

The operation of the electronic key system 3 when the user is in the vehicle 2 will now be described with reference to Figs. 7 to 12.

Here, it is assumed here that the user is in the vehicle 2 and operates the engine switch 33 when the electronic key 1 is located at position Z as shown in Fig. 3. The operated engine switch 33 sends an operation signal to the verification ECU 21. In response to the operation signal, the verification ECU 21 starts vehicle interior verification. The verification ECU 21 transmits a wake signal Swk (request signal Srq) with a relatively weak output from the driver side LF transmitter 22 to form a driver side verification communication area Adi (step S21). In this state, the electronic key 1 is located in the passenger side interior verification communication area Adi. Accordingly, the electronic key 1 receives the wake signal Swk with the LF reception unit 12 and transmits an acknowledgement signal Sac from the UHF transmission unit 13 in response to the wake signal Swk. In response to the acknowledgement signal Sac, the verification ECU 21 transmits a challenge signal Scc from the driver side LF transmitter 22. In response to the challenge signal Scc, the electronic key 1 transmits an ID code signal Sid (response signal Sre) from the UHF transmission unit 13.

Then, as shown in Fig. 12, the verification ECU 21 performs ID verification, or vehicle interior verification, using an ID code that is included in the received response signal Sre (step S22). When the ID verification is not accomplished in the passenger side interior verification communication area Api (step S22: NO), the verification ECU 21 ends processing. That is, the key location determination unit 21c determines that the electronic key 1 is located outside the vehicle 2. When the ID verification is accomplished (step S22: YES), the verification ECU 21 transmits a wake signal Swk (request signal Srq) with a relatively weal output from the passenger side LF transmitter 23 to form a passenger side interior verification communication area Api (step S23). The electronic key 1 is located in the passenger side interior verification communication area Api. Thus, the electronic key 1 receives the wake signal Swk with the LF reception unit 12 and transmits an acknowledgement signal Sac from the UHF transmission unit 13 in response to the wake signal Swk. In response to the acknowledgment signal Sac, the verification ECU 21 transmits a challenge signal Scc from the passenger side LF transmitter 23. In response to the challenge signal Scc, the electronic key 1 transmits an ID code signal Sid (response signal Sre) from the UHF transmission unit 13.

As shown in Fig. 12, the verification ECU 21 performs ID verification, or vehicle interior verification, again using an ID code that is included in the received response signal Sre (step S24). When the ID verification is accomplished (step S24: YES), the verification ECU 21 determines that the electronic key 1 is located inside the vehicle 2 (step S25). More specifically, since the electronic key 1 is located in the vehicle interior verification area Ai, which is where the driver side interior verification communication area Adi and the passenger side interior verification communication area Api overlap with each other, the verification ECU 21 determines that the electronic key 1 is located inside the vehicle 2. Then, the actuation permission unit 21d of the verification ECU 21 starts the engine with the engine ECU 32 (step S26). That is, the starting of the engine is permitted. When ID verification is not accomplished in the passenger side interior verification communication area Api (step S24: NO), the verification ECU 21 ends processing. That is, the verification ECU 21 does not permit operation of the engine ECU 32.

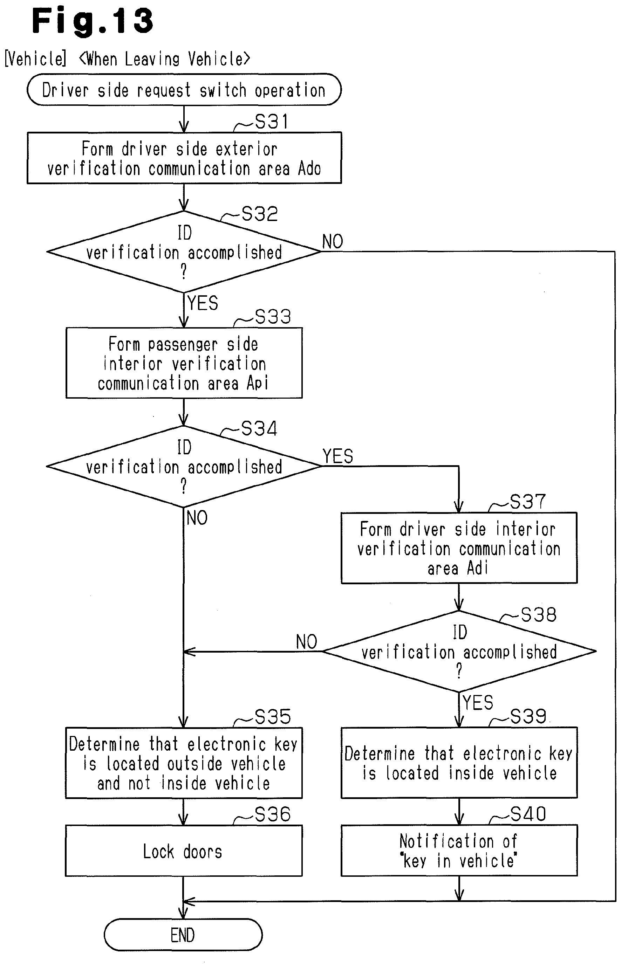

The operation of the electronic key system 3 when the user leaves the vehicle 2 will now be described with reference to Figs. 8 and 13.

Here, it is assumed that the user operates the driver side request switch 26 when leaving the vehicle 2 in a state in which the electronic key 1 is located at position X shown in Fig. 2A. The operated driver side request switch 26 sends an operation signal to the verification ECU 21. In response to the operation signal, the verification ECU 21 starts vehicle exterior verification. The verification ECU 21 transmits a wake signal Swk (request signal Srq) from the driver side LF transmitter 22 to form a driver side exterior verification communication area Ado (step S31). The electronic key 1 is located in the driver side exterior verification communication area Ado. Accordingly, the electronic key 1 receives the wake signal Swk with the LF reception unit 12 and transmits an acknowledgement signal Sac from the UHF transmission unit 13 in response to the wake signal Swk. In response to the acknowledgement signal Sac, the verification ECU 21 transmits a challenge signal Scc from the driver side LF transmitter 22. In response to the challenge signal Scc, the electronic key 1 transmits an ID code signal Sid (response signal Sre) from the UHF transmission unit 13.

Then, as shown in Fig. 13, the verification ECU 21 performs ID verification, or vehicle exterior verification, using an ID code that is included in the received response signal Sre (step S32). When the ID verification is accomplished (step S32: YES), the verification ECU 21 performs vehicle interior verification to determine whether the electronic key 1 has been forgotten inside the vehicle 2. The vehicle interior verification is performed using the transmitter that is arranged opposite to the side at which the door locking operation was performed. Thus, in the present example, the verification ECU 21 transmits a wake signal Swk (request signal Srq) with a relatively weak output from the passenger side LF transmitter 23 to form a passenger side interior verification communication area Api (step S33). The electronic key 1 is not located in the passenger side interior verification communication area Api. Accordingly, the electronic key 1 does not receive the wake signal Swk with the LF reception unit 12 and does not transmit an acknowledgement signal Sac. Since the acknowledgement signal Sac is not received from the electronic key 1, ID verification, or vehicle interior verification, is not accomplished (step S34: NO). In other words, the verification ECU 21 determines that the electronic key 1 is located outside the vehicle 2 and not inside the vehicle 2 (step S35). In this manner, when the electronic key 1 is located in the driver side exterior verification communication area Ado but not in the passenger side interior verification communication area Api, the key location determination unit 21c determines that the electronic key 1 is located outside the vehicle 2. Then, the actuation permission unit 21d of the verification ECU 21 locks the vehicle doors with the door lock device 34 through the main body ECU 31 (step S36). That is, the locking of the vehicle doors is permitted.

It will now be assumed that the user operates the driver side request switch 26 when the user leaves the vehicle 2 but forgets the electronic key 1 in the vehicle 2, for example, at position Z as shown in Fig. 2B. In this case, ID verification (vehicle exterior verification) is accomplished in the driver side exterior verification communication area Ado (step S32: YES). Further, ID verification (vehicle interior verification) is accomplished in the passenger side interior verification communication area Api (step S34: YES). In this case, the verification ECU 21 transmits a wake signal Swk (request signal Srq) with a relatively weak output from the driver side LF transmitter 22 and forms the driver side interior verification communication area Adi (step S37). The electronic key 1 is located in the vehicle 2 and thus receives the wake signal Swk and transmits an acknowledgement signal Sac. The verification ECU 21 receives the acknowledgment signal Sac from the electronic key 1. Thus, ID verification (vehicle interior verification) is accomplished (step S38). In this manner, when vehicle exterior verification and vehicle interior verification are both accomplished, the key location determination unit 21c determines that the electronic key 1 has been forgotten in the vehicle 2 (step S39).

Then, the verification ECU 21 generates a voice message, such as "electronic key in vehicle" from the speaker 35 (step S40). That is, the actuation permission unit 21d permits the generation of a notification with the speaker 35.

When the user leaves the vehicle 2 carrying the master key (electronic key 1), a different vehicle occupant may also leave the vehicle 2 at the same time carrying a sub-key (electronic key 1). For example, when the user, who is carrying the master key, operates the driver side request switch 26 in a state in which the sub-key is located at position Y as shown in Fig. 2B, ID verification, or vehicle exterior verification, is accomplished in the driver side exterior verification communication area Ado (step S32: YES). Then, ID verification is performed in the passenger side interior verification communication area Api. In this case, ID verification of the sub-key is accomplished but ID verification of the master key is not accomplished.

More specifically, the sub-key is located outside the vehicle 2 at the passenger side. Thus, ID verification is accomplished with the key number of the sub-key. However, ID verification is not accomplished with the key number of the master key. In this manner, ID verification is not accomplished for the master key. Thus, the key location determination unit 21c determines that an electronic key 1 is not present in the vehicle 2.

Then, to determine whether or not the sub-key has been forgotten in the vehicle 2, the verification ECU 21 transmits a wake signal (request signal Srq) with a relatively weak output from the drives side LF transmitter 22 to form a driver side interior verification communication area Adi. In this state, the sub-key is not located in the vehicle 2. Thus, ID verification (vehicle interior verification) of the sub-key is not accomplished. Accordingly, the verification ECU 21 determines that vehicle exterior verification has been accomplished but vehicle interior verification has not been accomplished and thereby permits locking of the vehicle doors.

In a state in which the electronic key 1 is carried by a different vehicle occupant and located at position W as shown in Fig. 2B, the user may leave the vehicle 2 and operate the driver side request switch 26. In this case, when ID verification (vehicle interior verification) is not accomplished in the driver side interior verification communication area Adi (step S38: NO), the verification ECU 21 proceeds to step S35.

In the electronic key system 3, the driver side LF transmitter 22 forms the driver side exterior verification communication area Ado and the driver side interior verification communication area Adi with different sizes. Further, the passenger side LF transmitter 23 forms the passenger side exterior verification communication area Apo and the passenger side interior verification communication area Api with different sizes. Thus, a communication area required for determining whether or not the electronic key 1 is located outside the vehicle 2 can be formed, and a communication area required for determining whether or not the electronic key 1 is located inside the vehicle 2 can be formed. Accordingly, the determination of whether the electronic key 1 is located outside or inside the vehicle 2 is accurate.

Further, for example, when the driver side request switch 26 is operated, the driver side LF transmitter 22, which is located at the side where the door locking operation was performed, first performs vehicle exterior verification with the driver side LF transmitter 23 and then performs vehicle interior verification with the passenger side LF transmitter 23, which is located at the side opposite to where the door locking operation was performed. When determining that vehicle interior verification has not been accomplished and that the electronic key 1 has not been forgotten in the vehicle 2, locking of the doors is permitted. This reduces the number of communications and shortens the communication time required for ID verification.

The electronic key system 3 of the present embodiment has the advantages described below.
(1) When ID verification of the electronic key 1 is accomplished in the exterior verification communication area Ado (or Apo), the vehicle 2 determines that the electronic key 1 is located outside the vehicle 2. When ID verification of the electronic key 1 is accomplished in the driver side interior verification communication area Adi or the passenger side interior verification communication area Api, the vehicle 2 determines that the electronic key 1 is located inside the vehicle 2. Thus, the location of the electronic key 1 can be determined with the two LF transmitters 22 and 23. Further, the size of the exterior verification communication area Ado (Apo) differs from the size of the interior verification communication area Adi (Api). This allows for the formation of the desired communication areas inside and outside the vehicle 2 in accordance with the shape of the vehicle 2. Thus, the location of the electronic key 1 can be determined with a small number of transmission devices.
(2) The vehicle 2 determines whether or not the electronic key 1 is located outside or inside the vehicle 2 based on whether or not ID verification is accomplished in both of the driver side communication area and passenger side communication area. Thus, in comparison to when attempting ID verification with either one of the communication areas, the accuracy for determining the electronic key 1 can be increased.
(3) After vehicle exterior verification is accomplished, the vehicle 2 uses the transmitter located at the side opposite to the operated one of the request switches 26 and 28 to perform vehicle interior verification. When the presence of the electronic key 1 cannot be determined with the vehicle interior verification, the vehicle 2 determines that the electronic key 1 is not located in the vehicle 2. Thus, when the electronic key 1 is actually not located in the vehicle 2, it can be determined whether or not the electronic key 1 has been forgotten in the vehicle 2 by performing vehicle interior verification once. This reduces the number of times communication areas are formed during vehicle exterior verification. Accordingly, the time required to determine the location of the electronic key 1, that is, the time required for ID verification can be shortened.
(4) The vehicle 2 can determine whether the electronic key 1 is located inside or outside the vehicle 2 even when the electronic key 1 is located opposite to the side of the operated one of the request switches 26 and 28. This ensures the accuracy for determining the location of the electronic key 1.
(5) The wake signals Swk transmitted from the LF transmitters 22 and 23 form the exterior verification communication areas Ado and Apo and the interior verification communication areas Adi and Api, this sizes of which differ from those of the exterior verification communication areas Ado and Apo. In addition, the electronic key 1 determines whether or not the challenge signal Scc has been received using different received signal strength thresholds. Thus, the location of the electronic key 1 can be determined with further accuracy using a small number of transmission devices.
(6) The vehicle 2 attempts ID verification in a predetermined order from the electronic key 1 that accomplished the preceding ID verification. Thus, the electronic key 1 having a high likelihood of accomplishing ID verification is checked at an early stage. This reduces the time required to determine the location of the electronic key 1.
(7) The request switches 26 and 28 are respectively arranged in the driver side door 25 and passenger side door 27. Thus, the request switches 26 and 28 are arranged near the middle of the vehicle 2 in the front to rear direction. This ensures that the electronic key 1 is located in the exterior communication areas Ado and Adp when the user carries the electronic key 1 and operates the request switches 26 and 28.
(8) After determining that the electronic key 1 is located in the communication area when an acknowledgement signal Sac is returned in response to the wake signal Swk, the vehicle 2 sends a challenge signal Scc and receives a response signal Sre to perform ID verification. Thus, when the electronic key 1 is not located in a communication area, the electronic key 1 may be determined as not being present just with the wake signal Swk. This shortens the communication time.

It should be apparent to those skilled in the art that the present invention may be embodied in many other specific forms without departing from the scope of the invention. Particularly, it should be understood that the present invention may be embodied in the following forms.

In the above embodiment, the driver side LF transmitter 22 is arranged in the driver side door 25, and the passenger side LF transmitter 23 is arranged in the passenger side door 27. However, the LF transmitters 22 and 23 may respectively be arranged on right and left pillars. For example, the LF transmitters 22 and 23 may be arranged on B-pillars (center pillars), which are arranged at the middle part of the vehicle 2 with respect to the front to rear direction.

In the above embodiment, when a plurality of electronic keys 1 are registered in the verification ECU 21, ID verification is performed on the electronic key 1 in a predetermined order. However, ID verification may be performed on the electronic key 1 in any order.

In the above embodiment, to increase the accuracy for determining the location of the electronic key 1, the received signal intensity threshold of the electronic key 1 is changed by a location determination code (exterior information and interior information) included in a wake signal Swk. However, as long as the location of the electronic key 1 can be determined with the areas formed by the LF transmitters 22 and 23, the wake signal Swk does not have to include the location determination code. That is, the received signal intensity threshold of the electronic key 1 does not have to be changed.

In the above embodiment, when the driver side request switch 26 is operated, the electronic key 1 is located in the driver side exterior verification communication area Ado, and the electronic key 1 is located in the passenger side interior verification communication area Api, the vehicle 2 determines whether or not the electronic key 1 is located in the passenger side interior verification communication area Adi. However, a long as the electronic key 1 can accurately be determining as being located in the vehicle 2 with the driver side exterior verification communication area Ado and the passenger side interior verification communication area Api, the determination using the passenger side interior verification communication area Adi can be eliminated. The same applies when the passenger side request switch 28 is operated.

In the above embodiment, each of the communication areas Ado, Adi, Apo, and Api include the vehicle interior. However, each of the driver side exterior verification communication area Ado and the passenger side exterior verification communication area Apo may be formed so as not to solely include the entire vehicle interior and so that the entire vehicle interior is included in combined communication areas. Further, each of the driver side interior verification communication area Adi and the passenger side interior verification communication area Api may be formed so as not to solely include the entire vehicle interior and so that the entire vehicle interior is included in combined communication areas.

In the above embodiment, the driver side LF transmitter 22 and the passenger side LF transmitter 23 respectively form communication areas for the driver side and passenger side of the vehicle 2. However, communication areas may be formed in the front and rear sides of the vehicle 2 as long as the vehicle interior and vehicle exterior are included in each communication area.

In the above embodiment, the challenge signal Scc includes a vehicle ID and a challenge code. However, a vehicle signal including a vehicle ID may be additionally transmitted. In this case, when an acknowledgement signal Sac is returned in response to the vehicle signal from the electronic key 1, the vehicle 2 may transmit a challenge signal Scc including a challenge code. In this case, when the electronic key 1 does not correspond to the vehicle 2, communication can be ended without receiving the challenge code.

In the above embodiment, the frequency of the wireless signals used by the electronic key system 3 is not necessarily limited to the LF and UHF bands, and other frequencies may be used. Further, the frequency of the wireless signal transmitted from the vehicle 2 to the electronic key 1 and the frequency of the wireless signal returned from the electronic key 1 to the vehicle 2 do not necessarily have to be different and may be the same.

In the above embodiment, the speaker 35 generates a message indicating that the electronic key 1 is located in the vehicle 2. Instead, for example, a buzzer may make a sound or a light may be illuminated to indicate that the electronic key 1 is located in the vehicle 2.

In the above embodiment, the electronic key system 3 does not have to use communication from the vehicle 2 as a trigger for performing ID verification and may use communication from the electronic key 1 as such a trigger.

In the above embodiment, the LF transmitters 22 and 23 may be arranged at any location.

In the above embodiment, there may be any number of LF transmitters 22 and 23.

The present examples and embodiments are to be considered as illustrative and not restrictive, and the invention is not to be limited to the details given herein, but may be modified within the scope and equivalence of the appended claims.

An electronic key system (3) includes transmission devices (22, 23) arranged in a vehicle (2). Each transmission device (22, 23) forms a communication area (Ado;Adi, Apo;Api) and transmits an inquiry signal (Swk). Each transmission device (22, 23) forms an exterior verification communication area (Ado; Apo) when determining whether or not the electronic key (1) is located outside the vehicle (2) and an interior verification communication area (Adi; Api) when determining whether or not the electronic key (1) is located inside the vehicle (2). An area setting unit (21b) sets the exterior verification communication area (Ado; Apo) with a size that differs from that of the interior verification communication area (Adi; Api).

## Claims

1. An electronic key system (3) including a plurality of transmission devices (22, 23) arranged in a vehicle (2), wherein each of the transmission devices (22, 23) is configured to transmit an inquiry signal (Swk) to an electronic key (1) to start ID verification and form a communication area (Ado;Adi, Apo;Api), the communication areas of the transmission devices (22, 23) are partially overlapped in an overlapping region (Ai), and the vehicle (2) is configured to check a combination of response signals (Sid) received from the electronic key (1) in response to the inquiry signals (Swk) from the transmission devices (22, 23) to determine where the electronic key (1) is located and perform the ID verification, the electronic key system (3) further comprising:
an area setting unit (21b) that is configured to set an exterior verification communication area (Ado; Apo), which is formed by each of the transmission devices (22, 23) when determining whether or not the electronic key (1) is located outside the vehicle (2), and an interior verification communication area (Adi; Api), which is formed by each of the transmission devices (22, 23) when determining whether or not the electronic key (1) is located inside the vehicle (2), wherein the area setting unit (21b) is further configured to set the exterior verification communication area (Ado; Apo) with a size that differs from that of the interior verification communication area (Adi; Api);
an operation unit (26; 28; 33) that is configured to be operated when actuating an in-vehicle device, wherein the transmission devices (22, 23) are configured such that one of the transmission devices (22, 23) starts transmission of the inquiry signal (Swk) when the operation unit (26; 28; 33) is operated; and
a determination unit (21c) that is arranged in the vehicle (2) to determine where the electronic key (1) is located,
wherein the determination unit (21c) is configured such that
when the operation unit (26; 28; 33) is operated, the determination unit (21c) determines whether or not the electronic key (1) is located outside the vehicle (2) based on the exterior verification communication area (Ado or Apo) formed by a first one of the transmission devices (22, 23),
when the determination unit (21c) acknowledges the presence of the electronic key (1) during determination of whether or not the electronic key (1) is located outside the vehicle (2) based on the exterior verification communication area (Ado or Apo), the determination unit (21c) then determines whether or not the electronic key (1) is located inside the vehicle (2) based on the interior verification communication area (Adi or Api) formed by a second one of the transmission devices (22, 23),
when presence of the electronic key (1) cannot be acknowledged during determination of whether or not the electronic key (1) is located inside the vehicle (2) based on the interior verification communication area (Adi or Api), the determination unit (21c) determines that the electronic key (1) is not located inside the vehicle (2), and
when the determination unit (21c) acknowledges the presence of the electronic key (1) during determination of whether or not the electronic key (1) is located inside the vehicle (2) based on the interior verification communication area (Adi or Api), the determination unit (21c) determines again whether or not the electronic key (1) is located inside the vehicle (2) based on the interior verification communication area (Api or Adi) formed by the first transmission device of the transmission devices (22, 23).

2. The electronic key system (3) according to claim 1, being **characterized in that** the determination unit (21c) is configured to determine whether or not the electronic key (1) is located inside the vehicle (2) based on whether or not the ID verification is accomplished in both of a right communication area (Adi), which is formed in an area including an interior and a right exterior side of the vehicle (2), and a left communication area (Api), which is formed in an area including the interior and left exterior side of the vehicle (2).

3. The electronic key system (3) according to claim 1, being **characterized in that** each of the transmission devices (22, 23) is configured to adjust a transmission output of the inquiry signal (Swk) to form the exterior verification communication area (Ado; Apo) and the interior verification communication area (Adi; Api) with different sizes.

4. The electronic key system (3) according to any one of claims 1 to 3, being **characterized in that**
each of the transmission devices (22, 23) is configured to
insert exterior information (Ca) in the transmitted inquiry signal (Swk) when forming the exterior verification communication area (Ado; Apo), and
insert interior information (Cb) in the transmitted inquiry signal (Swk) when forming the interior verification communication area (Adi; Api),
the electronic key (1) is configured to
determine, when receiving the inquiry signal (Swk) that includes the exterior information (Ca), whether or not to receive a following wireless signal (Scc) that has been transmitted from the transmission devices (22, 23) by using a first received signal intensity threshold (B1),
determine, when receiving the inquiry signal (Swk) that includes the interior information (Cb), whether or not to receive a following wireless signal (Scc) that has been transmitted from the transmission devices (22, 23) by using a second received signal intensity threshold (B2), which is greater than a first received signal intensity threshold (B1), and
transmit the response signal (Sid) when receiving the wireless signal (Scc).

5. The electronic key system (3) according to any one of claims 1 to 3, being **characterized in that**
the transmission devices (22, 23) are configured such that
when a plurality of electronic keys (1) are registered to the vehicle (2), the transmission devices (22, 23) attempt ID verification on each of the electronic keys (1) in a predetermined order, and
when an electronic key (1) accomplished a preceding ID verification, the transmission devices (22, 23) attempt the ID verification from the electronic key that accomplished the preceding ID verification.

6. The electronic key system (3) according to any one of claims 1 to 3, being **characterized in that** the operation unit (26; 28; 33) includes a first operation unit (26), which is arranged in the vicinity of a driver side door, and a second operation unit (28), which is arranged in the vicinity of a passenger side door.

## Patentansprüche

1. Elektronikschlüsselsystem (3) mit einer Vielzahl von Sendevorrichtungen (22, 23), die in einem Fahrzeug (2) eingerichtet sind, wobei jede der Sendevorrichtungen (22, 23) konfiguriert ist zum Senden eines Abfragesignals (Swk) an einen elektronischen Schlüssel (1), um eine ID-Verifikation zu starten, und Bilden eines Kommunikationsbereichs (Ado; Adi, Apo; Api), wobei die Kommunikationsbereiche der Sendevorrichtungen (22, 23) in einem Überlappungsgebiet (Ai) teilweise überlappen, und das Fahrzeug (2) konfiguriert ist zum Prüfen einer Kombination von Antwortsignalen (Sid), die von dem elektronischen Schlüssel (1) in Erwiderung auf die Abfragesignale (Swk) von den Sendevorrichtungen (22, 23) empfangen werden, um zu bestimmen, wo sich der elektronische Schlüssel (1) befindet, und Durchführen der ID-Verifikation, wobei das Elektronikschlüsselsystem (3) zusätzlich aufweist:
eine Bereichseinstelleinheit (21b), die konfiguriert ist zum Einstellen eines Außenverifikationskommunikationsbereichs (Ado; Apo), der durch jede der Sendevorrichtungen (22, 23) gebildet wird, wenn bestimmt wird, ob sich der elektronische Schlüssel (1) außerhalb des Fahrzeugs (2) befindet oder nicht, und eines Innenverifikationskommunikationsbereichs (Adi; Api), der durch jede der Sendevorrichtungen (22, 23) gebildet wird, wenn bestimmt wird, ob sich der elektronische Schlüssel (1) innerhalb des Fahrzeugs (2) befindet oder nicht, wobei die Bereichseinstelleinheit (21b) ferner konfiguriert ist zum Einstellen des Außenverifikationskommunikationsbereichs (Ado; Apo) mit einer Größe, die verschieden ist von derjenigen des Innenverifikationskommunikationsbereichs (Adi; Api);
eine Bedieneinheit (26; 28; 33), die konfiguriert ist, bei Betätigung einer fahrzeugeigenen Vorrichtung bedient zu werden, wobei die Sendevorrichtungen (22, 23) derart konfiguriert sind, dass eine der Sendevorrichtungen (22, 23) ein Senden des Abfragesignals (Swk) startet, wenn die Bedieneinheit (26; 28; 33) bedient wird; und
eine Bestimmungseinheit (21c), die in dem Fahrzeug (2) eingerichtet ist, zum Bestimmen, wo sich der elektronische Schlüssel (1) befindet,
wobei
die Bestimmungseinheit (21c) derart konfiguriert ist, dass
wenn die Bedieneinheit (26; 28; 33) bedient wird, die Bestimmungseinheit (21c) basierend auf dem Außenverifikationskommunikationsbereich (Ado oder Apo), der durch eine erste der Sendevorrichtungen (22, 23) gebildet wird, bestimmt, ob sich der elektronische Schlüssel (1) außerhalb des Fahrzeugs (2) befindet oder nicht,
wenn die Bestimmungseinheit (21c) die Präsenz des elektronischen Schlüssels (1) während einer Bestimmung, ob sich der elektronische Schlüssel (1) außerhalb des Fahrzeugs (2) befindet oder nicht, basierend auf dem Außenverifikationskommunikationsbereich (Ado oder Apo) bestätigt, die Bestimmungseinheit (21c) dann basierend auf dem Innenverifikationskommunikationsbereich (Adi oder Api), der durch eine zweite der Sendevorrichtungen (22, 23) gebildet wird, bestimmt, ob sich der elektronische Schlüssel (1) innerhalb des Fahrzeugs (2) befindet oder nicht,
wenn eine Präsenz des elektronischen Schlüssels (1) während einer Bestimmung, ob sich der elektronische Schlüssel (1) innerhalb des Fahrzeugs (2) befindet oder nicht, basierend auf dem Innenverifikationskommunikationsbereich (Adi oder Api) nicht bestätigt werden kann, die Bestimmungseinheit (21c) bestimmt, dass sich der elektronische Schlüssel (1) nicht innerhalb des Fahrzeugs (2) befindet, und
wenn die Bestimmungseinheit (21c) die Präsenz des elektronischen Schlüssels (1) während einer Bestimmung, ob sich der elektronische Schlüssel (1) innerhalb des Fahrzeugs (2) befindet oder nicht, basierend auf dem Innenverifikationskommunikationsbereich (Adi oder Api) bestätigt, die Bestimmungseinheit (21c) basierend auf dem Innenverifikationskommunikationsbereich (Api oder Adi), der durch die erste Sendevorrichtung der Sendevorrichtungen (22, 23) gebildet wird, erneut bestimmt, ob sich der elektronische Schlüssel (1) innerhalb des Fahrzeugs (2) befindet oder nicht.

2. Elektronikschlüsselsystem (3) gemäß Anspruch 1, **dadurch gekennzeichnet, dass** die Bestimmungseinheit (21c) konfiguriert ist zum Bestimmen, ob sich der elektronische Schlüssel (1) innerhalb des Fahrzeugs (2) befindet oder nicht, basierend darauf, ob die ID-Verifikation in sowohl einem rechten Kommunikationsbereich (Adi), der in einem Bereich umfassend einen Innenraum und eine rechte Außenseite des Fahrzeugs (2) gebildet wird, und einem linken Kommunikationsbereich (Api), der in einem Bereich umfassend den Innenraum und eine linke Außenseite des Fahrzeugs (2) gebildet wird, bewerkstelligt wird oder nicht.

3. Elektronikschlüsselsystem (3) gemäß Anspruch 1, **dadurch gekennzeichnet, dass** jede der Sendevorrichtung (22, 23) konfiguriert ist zum Anpassen einer Sendeleistung des Abfragesignals (Swk), um den Außenverifikationskommunikationsbereich (Ado; Apo) und den Innenverifikationskommunikationsbereich (Adi; Api) mit unterschiedlichen Größen zu bilden.

4. Elektronikschlüsselsystem (3) gemäß einem der Ansprüche 1 bis 3, **dadurch gekennzeichnet, dass**
jede der Sendevorrichtungen (22, 23) konfiguriert ist zum
Einfügen einer Außeninformation (Ca) in das gesendete Abfragesignal (Swk) bei Bildung des Außenverifikationskommunikationsbereichs (Ado; Apo), und
Einfügen einer Inneninformation (Cb) in das gesendete Abfragesignal (Swk) bei Bildung des Innenverifikationskommunikationsbereichs (Adi; Api),
der elektronische Schlüssel (1) konfiguriert ist zum
Bestimmen, bei Empfang des Abfragesignals (Swk), das die Außeninformation (Ca) umfasst, ob ein folgendes Drahtlossignal (Scc), das von den Sendevorrichtungen (22, 23) gesendet wurde, zu empfangen ist oder nicht, durch Verwendung eines ersten Empfangssignalstärkeschwellenwerts (B1),
Bestimmen, bei Empfang des Abfragesignals (Swk), das die Inneninformation (Cb) umfasst, ob ein folgendes Drahtlossignal (Scc), das von den Sendevorrichtungen (22, 23) gesendet wurde, zu empfangen ist oder nicht, durch Verwendung eines zweiten Empfangssignalstärkeschwellenwerts (B2), der größer ist als ein erster Empfangssignalstärkeschwellenwert (B1), und
Senden des Antwortsignals (Sid) bei Empfang des Drahtlossignals (Scc).

5. Elektronikschlüsselsystem (3) gemäß einem der Ansprüche 1 bis 3, **dadurch gekennzeichnet, dass**
die Sendevorrichtungen (22, 23) derart konfiguriert sind, dass
wenn eine Vielzahl von elektronischen Schlüsseln (1) an dem Fahrzeug (2) registriert sind, die Sendevorrichtungen (22, 23) eine ID-Verifikation bezüglich jedes der elektronischen Schlüssel (1) in einer vorbestimmten Reihenfolge versuchen, und
wenn ein elektronischer Schlüssel (1) eine vorhergehende ID-Verifikation bewerkstelligt hat, die Sendevorrichtungen (22, 23) die ID-Verifikation von dem elektronischen Schlüssel versuchen, der die vorhergehende ID-Verifikation bewerkstelligt hat.

6. Elektronikschlüsselsystem (3) gemäß einem der Ansprüche 1 bis 3, **dadurch gekennzeichnet, dass** die Bedieneinheit (26; 28; 33) eine erste Bedieneinheit (26), die in der Nähe einer Fahrerseitentür eingerichtet ist, und eine zweite Bedieneinheit (28), die in der Nähe einer Beifahrerseitentür eingerichtet ist, umfasst.

## Revendications

1. Système de clé électronique (3) comportant une pluralité de dispositifs de transmission (22, 23) disposés dans un véhicule (2), dans lequel chacun des dispositifs de transmission (22, 23) est conçu pour émettre un signal d'interrogation (Swk) vers une clé électronique (1) pour démarrer une vérification d'identité et former une zone de communication (Ado ; Adi, Apo ; Api), les zones de communication des dispositifs de transmission (22, 23) se chevauchent partiellement dans une région de chevauchement (Ai), et le véhicule (2) est conçu pour contrôler une combinaison de signaux de réponse (Sid) reçus en provenance de la clé électronique (1) en réponse aux signaux d'interrogation (Swk) provenant des dispositifs de transmission (22, 23) afin de déterminer où se situe la clé électronique (1) et d'effectuer la vérification d'identité, le système de clé électronique (3) comprenant en outre :
une unité de définition de zone (21b) qui est conçue pour définir une zone de communication de vérification extérieure (Ado ; Apo) qui est formée par chacun des dispositifs de transmission (22, 23) lors de la détermination de ce que la clé électronique (1) se situe ou non à l'extérieur du véhicule (2), et une zone de communication de vérification intérieure (Adi ; Api) qui est formée par chacun des dispositifs de transmission (22, 23) lors de la détermination de ce que la clé électronique (1) se situe ou non à l'intérieur du véhicule (2), dans lequel l'unité de définition de zone (21b) est conçue en outre pour définir une zone de communication de vérification extérieure (Ado ; Apo) d'une taille qui diffère de celle de la zone de communication de vérification intérieure (Adi ; Api) ;
une unité de commande (26 ; 28 ; 33) qui est conçue pour être commandée lors de l'actionnement d'un dispositif à l'intérieur du véhicule, dans lequel les dispositifs de transmission (22, 23) sont conçus de telle sorte que l'un des dispositifs de transmission (22, 23) démarre l'émission du signal d'interrogation (Swk) lorsque l'unité de commande (26 ; 28 ; 33) est commandée ; et
une unité de détermination (21c) qui est disposée dans le véhicule (2) pour déterminer où se situe la clé électronique (1),
dans lequel l'unité de détermination (21c) est conçue de telle sorte que :
lorsque l'unité de commande (26 ; 28 ; 33) est commandée, l'unité de détermination (21c) détermine si la clé électronique (1) se situe ou non à l'extérieur du véhicule (2), sur la base de la zone de communication de vérification extérieure (Ado ou Apo) formée par un premier des dispositifs de transmission (22, 23),
lorsque l'unité de détermination (21c) reconnaît la présence de la clé électronique (1) au cours de la détermination de ce que la clé électronique (1) se situe ou non à l'extérieur du véhicule (2) sur la base de la zone de communication de vérification extérieure (Ado ou Apo), l'unité de détermination (21c) détermine ensuite si la clé électronique (1) se situe ou non à l'intérieur du véhicule (2) sur la base de la zone de communication de vérification intérieure (Adi ou Api) formée par un second des dispositifs de transmission (22, 23),
lorsque la présence de la clé électronique (1) ne peut pas être reconnue au cours de la détermination de ce que la clé électronique (1) se situe ou non à l'intérieur du véhicule (2) sur la base de la zone de communication de vérification intérieure (Adi ou Api), l'unité de détermination (21c) détermine que la clé électronique (1) ne se situe pas à l'intérieur du véhicule (2), et
lorsque l'unité de détermination (21c) reconnaît la présence de la clé électronique (1) au cours de la détermination de ce que la clé électronique (1) se situe ou non à l'intérieur du véhicule (2) sur la base de la zone de communication de vérification intérieure (Adi ou Api), l'unité de détermination (21c) détermine de nouveau si la clé électronique (1) se situe ou non à l'intérieur du véhicule (2) sur la base de la zone de communication de vérification intérieure (Api ou Adi) formée par le premier dispositif de transmission des dispositifs de transmission (22, 23).

2. Système de clé électronique (3) selon la revendication 1, **caractérisé en ce que** l'unité de détermination (21c) est conçue pour déterminer si la clé électronique (1) se situe ou non à l'intérieur du véhicule (2) sur la base de ce que la vérification d'identité est accomplie ou non à la fois dans une zone de communication droite (Adi) qui est formée dans une zone incluant un intérieur et un côté extérieur droit du véhicule (2), et dans une zone de communication gauche (Api) qui est formée dans une zone incluant l'intérieur et le côté extérieur gauche du véhicule (2).

3. Système de clé électronique (3) selon la revendication 1, **caractérisé en ce que** chacun des dispositifs de transmission (22, 23) est conçu pour régler une puissance d'émission du signal d'interrogation (Swk) pour former la zone de communication de vérification extérieure (Ado ; Apo) et la zone de communication de vérification intérieure (Adi ; Api) selon des tailles différentes.

4. Système de clé électronique (3) selon l'une quelconque des revendications 1 à 3, **caractérisé en ce que** :
chacun des dispositifs de transmission (22, 23) est conçu pour :
insérer des informations extérieures (Ca) dans le signal d'interrogation émis (Swk) lors de la formation de la zone de communication de vérification extérieure (Ado ; Apo), et
insérer des informations intérieures (Cb) dans le signal d'interrogation émis (Swk) lors de la formation de la zone de communication de vérification intérieure (Adi ; Api),
la clé électronique (1) est conçue pour :
déterminer, lors de la réception du signal d'interrogation (Swk) qui inclut les informations extérieures (Ca), s'il faut ou non recevoir un signal radioélectrique suivant (Scc) qui a été émis par les dispositifs de transmission (22, 23) en utilisant un premier seul d'intensité de signal reçu (B1),
déterminer, lors de la réception du signal d'interrogation (Swk) qui inclut les informations intérieures (Cb), s'il faut ou non recevoir un signal radioélectrique suivant (Scc) qui a été émis par les dispositifs de transmission (22, 23) en utilisant un second seul d'intensité de signal reçu (B2) qui est supérieur à un premier seuil d'intensité de signal reçu (B1), et
émettre le signal de réponse (Sid) lors de la réception du signal radioélectrique (Scc).

5. Système de clé électronique (3) selon l'une quelconque des revendications 1 à 3, **caractérisé en ce que** :
les dispositifs de transmission (22, 23) sont conçus de telle sorte que :
lorsqu'une pluralité de clés électroniques (1) est enregistrée pour le véhicule (2), les dispositifs de transmission (22, 23) tentent une vérification d'identité sur chacune des clés électroniques (1) dans un ordre prédéterminé, et
lorsqu'une clé électronique (1) a réussi une précédente vérification d'identité, les dispositifs de transmission (22, 23) tentent la vérification d'identité à partir de la clé électronique qui a réussi la précédente vérification d'identité.

6. Système de clé électronique (3) selon l'une quelconque des revendications 1 à 3, **caractérisé en ce que** l'unité de commande (26 ; 28 ; 33) comporte une première unité de commande (26) qui est disposée au voisinage d'une portière côté conducteur, et une seconde unité de commande (28) qui est disposée au voisinage d'une portière côté passager.
